# EUROPEAN PATENT APPLICATION

(11) **EP 3 243 874 A1**
(43) Date of publication of application: **15.11.2017**
(21) Application number: 15877102.2
(22) Date of filing: 28.12.2015
(51) Int. Cl.: C08L 21/00, B60C 1/00, C08L 23/00

(54) **RUBBER COMPOSITION INCLUDING CONJUGATED DIENE POLYMER AND OLEFIN POLYMER AND TIRE USING SAME**

(30) Priority: 09.01.2015 JP 2015003680
(71) Applicant: Bridgestone Corporation, Tokyo 104-8340 (JP)
(72) Inventor: KOTANI, Kyohei, Tokyo 104-8340 (JP)
(74) Representative: Oxley, Robin John George
(86) International application number: PCT/JP2015/086519
(87) International publication number: WO 2016/111230

(57) **Abstract**

The present invention relates to: a rubber composition comprising a matrix of a nonpolar conjugated diene polymer in which domains formed from an olefin polymer are dispersed, the matrix and the domain having an interface therebetween in which a chemical bond exists after vulcanization, the domain having a dynamic compressive complex elastic modulus (E_{c}*) of 10 MPa or less; or a rubber composition comprising a matrix of a nonpolar conjugated diene polymer in which domains formed from an olefin polymer are dispersed, the matrix and the domain having an interface therebetween in which a chemical bond exists after vulcanization, with an average distance between the domains of 2 µm or less. A rubber composition for improving the ozone resistance and a tire having improved ozone resistance are provided.

## Description

### TECHNICAL FIELD

The present invention relates to a rubber composition including a conjugated diene polymer and an olefin polymer and a tire using the same.

### BACKGROUND ART

Conventionally, various attempts have been made to improve the weather resistance of rubber products such as tires. In PTL 1, a rubber composition with improved weather resistance having rubber components containing an ethylene-propylene-diene rubber with an ethylene/propylene ratio of 70/30 to 80/20 is disclosed as a rubber composition for forming the outer sidewall layer of a tire.

Furthermore, in PTL 2, use of a rubber composition comprising 100 parts by mass of a rubber having an unsaturated bond with addition of: (a) a wax comprising a linear, branched, or cyclic hydrocarbon compound having 18 to 55 carbon atoms, and (b) a polyethylene oxide-polypropylene oxide copolymer having an average molecular weight of 1500 to 8000, with an ethylene oxide/propylene oxide ratio of 10/90 to 80/20, in amounts of 1.0 to 5.0 parts by mass, respectively, is proposed to improve the weather resistance.

### CITATION LIST

### PATENT LITERATURE

PTL1: JP 08-231773 A
PTL2: JP 2007-186565 A

### SUMMARY OF INVENTION

### TECHNICAL PROBLEM

Improving the weather resistance of rubber products such as tires is, however, still required.

The present inventor has focused on the importance of improvement of the ozone resistance of a rubber composition for the improvement of the weather resistance of rubber products such as tires.

The present invention has been made from the viewpoint, with an object to provide a rubber composition for improving the ozone resistance and a tire having improved ozone resistance.

### SOLUTION TO PROBLEM

Through extensive investigation, the present inventor found that a rubber composition having a matrix of nonpolar conjugated diene polymer in which domains formed from an olefin polymer with specific conditions are dispersed can solve the problem. The present invention has been thus accomplished based on the finding.

The present invention provides:
(1) a rubber composition comprising a matrix of a nonpolar conjugated diene polymer in which domains formed from an olefin polymer are dispersed, the matrix and the domain having an interface therebetween in which a chemical bond exists after vulcanization, the domain having a dynamic compressive complex elastic modulus (E_{c}*) of 10 MPa or less, wherein the dynamic compressive complex elastic modulus (E_{c}*) is obtained by the steps of: fixing a sample to a sample fixing base specialized for an atomic force microscope (AFM); measuring a shape image in an AC mode with the AFM and a cantilever (material: Si, spring constant: 48 N/m, radius of curvature at the tip: 150 nm) at room temperature (23°C) and simultaneously measuring a force curve of a portion observed as the domain in a contact mode (at room temperature (23°C), with a moving speed of the cantilever of 2 µm/s and a maximum indentation load of 2 µN); and analyzing a force-volume curve obtained from the force curve based on the theory of Hertz included in the software attached to the AFM device; and
(2) a rubber composition comprising a matrix of a nonpolar conjugated diene polymer in which domains formed from an olefin polymer are dispersed, the matrix and the domain having an interface therebetween in which a chemical bond exists after vulcanization, with an average distance between the domains of 2 µm or less, wherein the average distance (µm) between the domains is measured by the steps of: observing a thin film of the rubber composition after vulcanization with an atomic force microscope (AFM), obtaining a total area of the matrix portion and a summation of boundary lengths of the domain portions through binarization of the matrix and the domains; and calculating a ratio between these values as a statistical distance between domain walls, i.e. the average distance between domains.

### ADVANTAGEOUS EFFECTS OF INVENTION

According to the present invention, a rubber composition for improving the ozone resistance and a tire having improved ozone resistance can be provided.

### DESCRIPTION OF EMBODIMENTS

The rubber composition of the present invention is first described as follows.

### [Rubber composition]

In a first aspect of the present invention, a rubber composition comprises a matrix of a nonpolar conjugated diene polymer in which domains formed from an olefin polymer are dispersed, the matrix and the domain having an interface therebetween in which a chemical bond exists after vulcanization, the domain having a dynamic compressive complex elastic modulus (E_{c}*) of 10 MPa or less, wherein the dynamic compressive complex elastic modulus (E_{c}*) is obtained by the steps of: fixing a sample to a sample fixing base specialized for an atomic force microscope (AFM), measuring a shape image in an AC mode with the AFM and a cantilever (material: Si, spring constant: 48 N/m, radius of curvature at the tip: 150 nm) at room temperature (23°C) and simultaneously measuring a force curve of a portion observed as the domain in a contact mode (at room temperature (23°C), with a moving speed of the cantilever of 2 µm/s and a maximum indentation load of 2 µN) on this occasion; and analyzing a force-volume curve obtained from the force curve based on the theory of Hertz included in the software attached to the AFM device.

In a second aspect of the present invention, a rubber composition comprises a matrix of a nonpolar conjugated diene polymer in which domains formed from an olefin polymer are dispersed, the matrix and the domain having an interface therebetween in which a chemical bond exists after vulcanization, with an average distance between the domains of 2 µm or less, wherein the average distance between the domains is measured by the steps of: observing a thin film of the rubber composition after vulcanization with an atomic force microscope (AFM); obtaining a total area of the matrix portion and a summation of boundary lengths of domain portions through binarization of the matrix and the domains; and calculating a ratio between these values as a statistical distance between domain walls, i.e. the average distance between domains.

### [Matrix in the rubber composition of the present invention]

In the rubber composition of the present invention, the matrix refers to the sea portion of the rubber components in a rubber composition (also referred to as sea phase or continuous phase).

The matrix of the present invention is made from a nonpolar conjugated diene polymer. The nonpolar conjugated diene polymer is a conjugated diene polymer composed of carbon atoms and hydrogen atoms, including both of a conjugated diene homopolymer and a conjugated diene copolymer. From the viewpoint of forming a rubber composition, the conjugated diene copolymer is preferably a random copolymer or a multi-block copolymer, more preferably a multi-block copolymer or a random copolymer containing alternating bonds (with different monomers alternately bonded) in an amount of 5 mol% or more.

In the present invention, a random copolymer means a copolymer comprising random portions with monomer units of a conjugated diene compound and another conjugated diene compound and/or a non-conjugated olefin irregularly arranged. In contrast, a multi-block copolymer means a block copolymer having a structure including (A-B)ₓ, A-(B-A)ₓ and B-(A-B)ₓ, with a plurality of (A-B) or (B-A) structures. The block copolymer means a copolymer comprising a block portion made of the monomer unit of a conjugated diene compound and a block portion made of the monomer unit of another conjugated diene compound and/or a non-conjugated olefin.

As the nonpolar conjugated diene polymer, one or more polymers selected from the group consisting of polybutadiene, synthetic polyisoprene, natural rubber, a styrene-butadiene random copolymer, a styrene-isoprene random copolymer, an isoprene-butadiene copolymer, an ethylene-butadiene copolymer and a propylene-butadiene copolymer are preferred, and one or more polymers selected from the group consisting of polybutadiene, synthetic polyisoprene and natural rubber are particularly preferred.

The nonpolar conjugated diene polymer of the present invention includes a modified nonpolar conjugated diene polymer modified by a polar group-containing compound at a polymerization initiation terminal or a polymerizable active terminal.

### [Domain in the rubber composition of the present invention]

The domain in the rubber composition of the present invention refers to an island portion in the rubber components of a rubber composition (also referred to as island phase or dispersed phase). The domains of the present invention are dispersed in the matrix of the present invention so as to make the rubber composition of the present invention.

The domain of the present invention is formed from an olefin polymer, and a nonpolar conjugated diene polymer and the olefin polymer are contained in the rubber component.

After vulcanization, the domain of the present invention has a dynamic compressive complex elastic modulus (E_{c}*) of preferably 10 MPa or less, more preferably 5 MPa or less. After vulcanization, with a dynamic compressive complex elastic modulus (E_{c}*) of the domain of the present invention of 10 MPa or less, ozone cracks hardly occur in the surface of the rubber composition after vulcanization, so that the ozone resistance of the rubber composition can be improved. After vulcanization, the lower limit of the dynamic compressive complex elastic modulus (E_{c}*) of the domain of the present invention is preferably 0.2 MPa or more, more preferably 0.5 MPa or more, still more preferably 1 MPa or more, from the viewpoint of forming domains, though not particularly limited.

The olefin polymer to form the domains of the present invention is preferably an α-olefin polymer. The α-olefin polymer preferably includes one or more polymers selected from the group consisting of polyethylene (PE), polypropylene (PP), an ethylene-propylene copolymer (EPM) and an ethylene-propylene-diene terpolymer (EPDM). As the polyethylene (PE), a linear low-density polyethylene (LLDPE) is preferred.

After vulcanization, the rubber composition of the present invention has an average distance between domains of preferably 2 µm or less, more preferably 1 µm or less, still more preferably 0.8 µm or less, most preferably 0.6 µm or less. With an average distance between domains of 2 µm or less, the ozone resistance of the rubber composition can be improved. The lower limit of the average distance between domains is preferably 0.01 µm or more, more preferably 0.05 µm or more, most preferably 0.1 µm or more, from the viewpoint of easiness in forming domains, though not particularly limited.

In the rubber composition of the present invention, the mass ratio (matrix/domain) between the matrix and the domain to form the rubber composition is preferably (90/10) to (10/90), more preferably (90/10) to (20/80), most preferably (90/10) to (40/60), from the viewpoint of having an average distance between domains of 2 µm or less.

### [Interface between matrix and domain]

After vulcanization, a chemical bond needs to exist in the interface between the matrix and the domain of the rubber composition of the present invention. Although the chemical bond includes a covalent bond, a coordinate bond, a hydrogen bond, a van der Waals bond and the like, a covalent bond is preferred due to high stability of the bond.

In the present invention, preferably a chemical bond (covalent bond in particular) is formed in the interface between the matrix of nonpolar conjugated diene polymer and the domain formed from one or more olefin polymers selected from the group consisting of polyethylene, polypropylene, and an ethylene-propylene copolymer through one or more binders selected from the group consisting of a peroxide and an azo polymerization initiator.

Alternatively, preferably a chemical bond (covalent bond in particular) is formed in the interface between the matrix of nonpolar conjugated diene polymer and the domain formed from an ethylene-propylene-diene terpolymer through a sulfur cross-linking agent or a binder. In the case that the olefin polymer to form the domain is an ethylene-propylene-diene terpolymer, a conventional sulfur cross-linking agent functions as a binder, so that the use of a conventional sulfur cross-linking agent only allows a chemical bond, a covalent bond in particular, to be formed in the interface between the matrix and the domain, though a chemical bond may be formed through a binder. In the case that a chemical bond is formed in the interface between the matrix of nonpolar conjugated diene polymer and the domain formed from an ethylene-propylene-diene terpolymer through a sulfur cross-linking agent, however, use of a binder is conveniently unnecessary.

Examples of the sulfur cross-linking agent include sulfur, and a sulfur donating agent (morpholine disulfide, polymeric polysulfide, etc). The amount of the sulfur cross-linking agent used may be appropriately selected according to the circumstances, and the sulfur content is preferably in the range of 0.1 to 10 parts by mass relative to 100 parts by mass of rubber components (the total mass of the matrix and the domain).

### (Binder)

The binder for forming a chemical bond in the interface between the matrix of nonpolar conjugated diene polymer and the domain formed from an olefin polymer in the present invention is preferably a free radical generating agent.

The free radical generating agent is preferably at least one selected from the group consisting of a peroxide and an azo polymerization initiator.

### <Peroxide>

Examples of the peroxide include an inorganic peroxide and an organic peroxide, and an organic peroxide is preferred for use in a rubber composition for tires.

Examples of the organic peroxide include dialkyl peroxides such as dicumyl peroxide, α,α'-(t-butylperoxy)diisopropylbenzene, t-butylcumyl peroxide, 2,5-dimethyl-2,5-(t-butylperoxy)hexane, 2,5-dimethyl-2,5-bis(t-butylperoxy)hexyne-3; peroxyketals such as 1,1-di(t-butylperoxy)cyclohexane, 1,1-di(t-hexylperoxy)cyclohexane, 4,4-di(t-butylperoxy)n-butyl valerate, 2,2-di(t-butylperoxy)butane, 4,4-di(t-butylperoxy)valerianic acid n-butyl ester, 1,1-di(t-butylperoxy)-3,3,5-trimethylcyclohexane, 2,2-bis(4,4-di-t-butylperoxy cyclohexane)propane; and alkyl peresters such as 2,2,4-trimethylpentyl peroxyneodecanate, α-cumyl peroxyneodecanate, t-butyl peroxyneohexanate, t-butyl peroxyneopivalate, t-butyl peroxyacetate, t-butyl peroxylaurate, t-butyl peroxybenzoate, t-butyl peroxyphthalate, t-butyl peroxyisophthalate, and t-hexyl peroxybenzoate.

The amount of these organic peroxides used may be appropriately selected according to the circumstances, preferably in the range of 0.01 to 1.0 parts by mass relative to 100 parts by mass of the rubber components (total mass of the matrix and the domain).

### <Azo polymerization initiator>

Examples of the azo polymerization initiator include 2,2'-azobisisobutyronitrile (AIBN), 2,2'-azobis-2-methylbutyronitrile (AMBN), 2,2'-azobis-2,4-dimethyl valeronitrile (ADVN), and 2,2'-azobis-4-azobiscyanovaleric acid (salt) (ACVA).

The amount of the azo polymerization initiators used may be appropriately selected according to the circumstances, preferably in the range of 0.01 to 1.0 parts by mass relative to 100 parts by mass of the polymer components (total mass of the conjugated diene compound-nonconjugated olefin copolymer and the nonconjugated olefin polymer).

### (Filler)

The rubber composition of the present invention may be compounded with a filler(s), as needed.

One or more fillers selected from the group consisting of carbon black and silica may be preferably used as the filler.

The carbon black for use is not particularly limited, and may be appropriately selected from any conventional filler for rubber. For example, SRF, GPF, FEF, HAF, ISAF, or SAF may be used, and due to excellence in bending resistance and fracture resistance, FEF, HAF, ISAF, or SAF is particularly preferred. The carbon black has a nitrogen adsorption specific surface area N₂SA (in conformity with JIS K 6217-2:2001) of, preferably 30 to 150 m²/g, more preferably 35 to 150 m²/g, still more preferably 35 to 130 m²/g.

The carbon black may be used alone or in combination of two or more kinds thereof.

On the other hand, examples of the silica include wet silica (hydrous silicic acid), dry silica (anhydrous silicic acid), calcium silicate, aluminum silicate, and wet silica is particularly preferably used.

The BET specific surface area (measured in conformity with ISO 5794/1) of the wet silica is preferably 40 to 350 m²/g. The silica having a BET specific surface area in the range has an advantage that both of rubber reinforcement and dispersibility into rubber components can be achieved. From this viewpoint, silica having a BET specific surface area in the range of 80 to 300 m²/g is more preferred. A commercial product such as a product available under the trade name "NIPSIL AQ" or "NIPSIL KQ" from Tosoh Silica Corporation, or a product available under the trade name "ULTRASIL VN3" from Degussa can be used as such silica.

The silica may be used alone or in combination of two or more kinds thereof.

The amount of the one or more filler selected from the group consisting of carbon black and silica compounded into the rubber composition of the present invention is preferably 20 to 120 parts by mass, more preferably 35 to 100 parts by mass, relative to 100 parts by mass of the rubber components (total mass of the matrix and the domain). With a compounding amount of the filler of 20 parts by mass or more, the reinforcement effect can be achieved, and with a compounding amount of 120 parts by mass or less, excessive increase in the rolling resistance can be avoided.

### (Silane coupling agent)

When silica is used as a filler in the rubber composition of the present invention, a silane coupling agent can be compounded thereinto for the purpose of further improving the reinforcing property.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N, N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. Of those, bis(3-triethoxysilylpropyl) polysulfide and 3-trimethoxysilylpropylbenzothiazyl tetrasulfide are suited in terms of an effect of improving the reinforcing property and the like.

Those silane coupling agents may be used alone or in combination of two or more kinds thereof.

In the rubber composition of the present invention, the compounding amount of the silane coupling agent, which varies depending on the kind of the agent, preferably falls within the range of 2 to 20 parts by mass relative to 100 parts by mass of silica. With an amount of less than 2 parts by mass, the effect of the coupling agent is hardly achieved, while with an amount of more than 20 parts by mass, gelation of the rubber components may occur. From the viewpoints of the effect of coupling agent and the prevention of gelation, the compounding amount of the silane coupling agent preferably falls within the range of 5 to 15 parts by mass relative to 100 parts by mass of silica.

### (Other compounding agent)

Any one of the various chemicals to be typically used in the rubber industry such as a vulcanization accelerator, an antioxidant, a scorch preventive, zinc oxide, and stearic acid can be incorporated into the rubber composition of the present invention as desired to such an extent that the object of the present invention is not impaired.

The vulcanization accelerator which can be used in the present invention is not specifically limited, and may include a thiazole vulcanization accelerator such as 2-mercaptobenzothiazole (M) and benzothiazolyl disulfide (DM), a sulfenamide vulcanization accelerator such as N-cyclohexyl-2-benzothiazolylsulfenamide (CZ), N-(tert-butyl)-2-benzothiazolylsulfenamide (TBBS), N,N-dicyclohexyl-2-benzothiazolylsulfenamide (DZ), and N-oxydiethylene-2-benzothiazolylsulfenamide (NOBS), and a guanidine vulcanization accelerator such as 1,3-diphenylguanidine (DPG). The compounding amount thereof is preferably 0.1 to 5.0 parts by mass, more preferably 0.2 to 3.0 parts by mass relative to 100 parts by mass of the rubber components (total mass of the matrix and the domain).

Further, examples of the antioxidant that can be used in the rubber composition of the present invention include 3C (N-isopropyl-N'-phenyl-p-phenylenediamine), 6C [N-(1,3-dimethylbutyl)-N'-phenyl-p-phenylenediamine], 2,2,4-trimethyl-1,2-dihydroquinoline polymer, AW (6-ethoxy-2,2,4-trimethyl-1,2-dihydroquinoline), and a high-temperature condensation product of diphenylamine and acetone. The amount of use of the antioxidant is preferably 0.1 to 6.0 parts by mass, more preferably 0.3 to 5.0 parts by mass relative to 100 parts by mass of the rubber components (total mass of the matrix and the domain).

### [Method for manufacturing the rubber composition of the present invention]

The rubber composition of the present invention may be prepared by kneading the compounding components with a kneading machine such as a Banbury mixer, a roll, or an internal mixer. In order to allow a chemical bond to exist in the interface between the matrix and the domain after vulcanization, an organic peroxide cross-linking agent is preferably compounded in addition to a conventional sulfur cross-linking agent.

The rubber composition of the present invention thus prepared can improve the ozone resistance of tires, pneumatic tires in particular.

### [Tire]

The tire, the pneumatic tire in particular, of the present invention preferably comprise members having the rubber composition of the present invention described above.

Furthermore, from the viewpoint of substantially improving the ozone resistance, the rubber composition of the present invention is preferably used in at least one of a member for sidewall surface layer and a member for ground-gripping tread.

The tire of the present invention is manufactured by a conventional method. In other words, the rubber composition of the present invention comprising the various chemicals as described above, as needed, is extruded into a member for sidewall surface layer and/or a member for ground-gripping tread before vulcanization, so as to be laminated and formed into a green tire on a tire former in accordance with the conventional process. The green tire is heated under a pressure in a vulcanizing machine, so that a tire is obtained.

The tire may be filled with a gas of normal air, air with oxygen partial pressure changed, or an inert gas such as nitrogen.

### EXAMPLES

The present invention will be described more specifically with reference to Examples in the following. However, the present invention is not limited to the Examples. The measurements and evaluation were performed in accordance with the following methods, respectively.

### (1) Dynamic compressive complex elastic modulus (E_{c}*) of domain

The dynamic compressive complex elastic modulus (E_{c}*) was obtained by the steps of fixing a sample to the sample fixing base specialized for an atomic force microscope (AFM), measuring the shape image in the AC mode with the AFM and a cantilever (material: Si, spring constant: 48 N/m, radius of curvature at the tip: 150 nm) at room temperature (23°C), measuring the force curve of the portion observed as the domain in the contact mode (at room temperature (23°C), with a moving speed of the cantilever of 2 µm/s and a maximum indentation load of 2 µN) on this occasion, and analyzing the force-volume curve obtained from the force curve based on the theory of Hertz included in the software attached to the AFM device.

### (2) Average distance (µm) between domains

The average distance between domains was measured by the steps of observing the thin film of the rubber composition after vulcanization with an atomic force microscope (AFM), obtaining the total area of the matrix portion and the summation of boundary length of the domain portion through binarization of the matrix and the domains, and calculating the ratio between these values as statistical distance between domain walls, i.e. the average distance between domains.

### (3) Proportion of area of generated ozone cracks (%)

Under conditions including an ozone concentration of 50 pphm, a temperature of 40°C, a dynamic strain of 20%, a sample was exposed to an ozone atmosphere for 24 hours. The area of generated ozone cracks was divided by the total area of the sample and multiplied by 100, so that the proportion was indicated in percentage.

### Examples 1 to 4 and Comparative Examples 1 to 4

Each of the rubber compositions in Examples and Comparative Examples was prepared as follows. Based on each of the compounding formulation shown in Table 1, a step of kneading a master batch was performed at an initiation temperature of 110°C, at a rotation speed of 70 rpm, for a kneading time period shown in Table 1, using a Banbury mixer. Subsequently, a step of finally kneading the batch with zinc oxide, a vulcanization accelerator, sulfur and, as needed, an organic peroxide was performed, so that each of the rubber compositions in Examples and Comparative Examples was prepared.

Each of the rubber compositions thus obtained was vulcanized under vulcanization conditions at 160°C for 20 minutes, so that a specified sample piece was made for evaluation of the dynamic compressive complex elastic modulus (E_{c}*) of the domain and the proportion of the area of generated ozone cracks (%). The results are shown in Table 1.

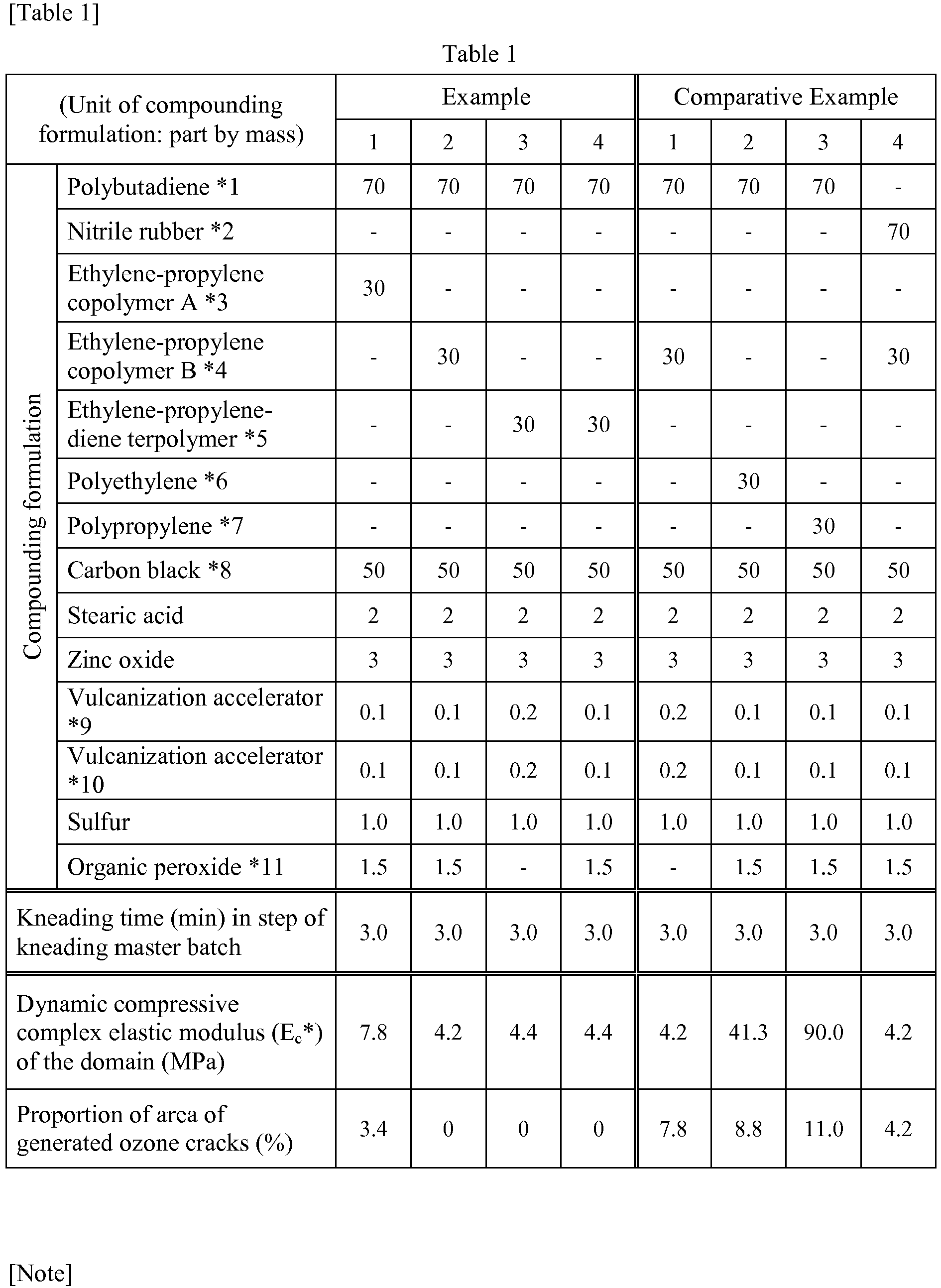

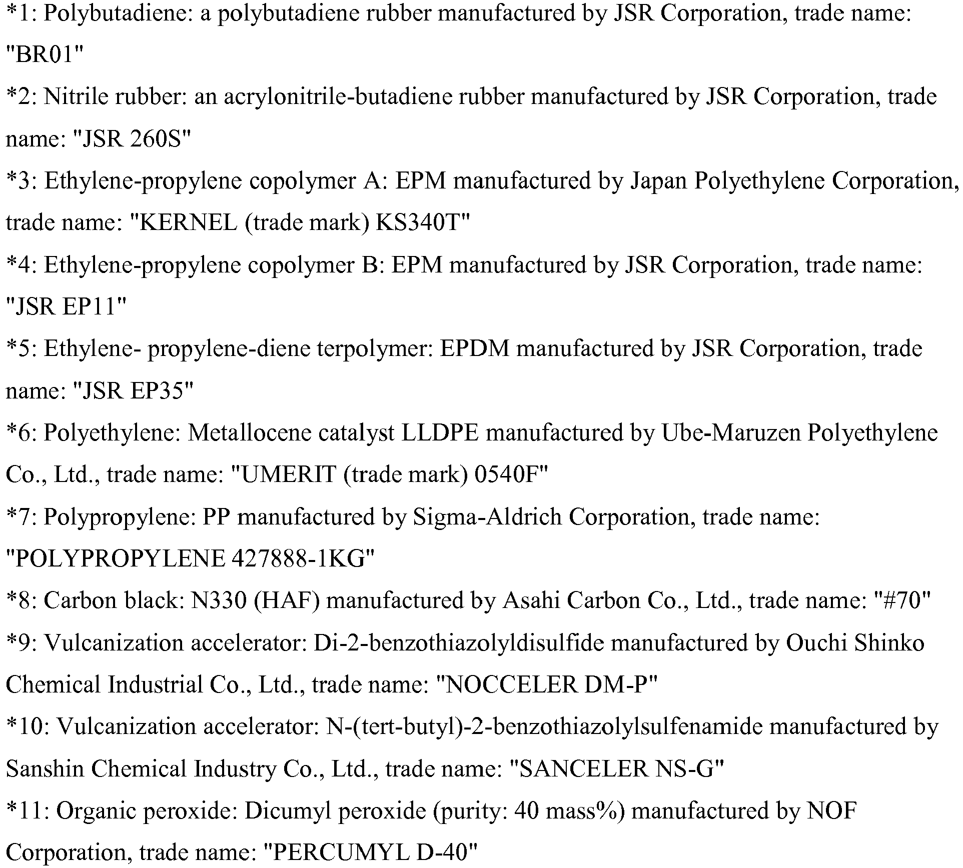

### Examples 5 to 9 and Comparative Examples 5 to 6

Each of the rubber compositions in Examples and Comparative Examples was prepared as follows. Based on each of the compounding formulation shown in Table 2, a step of kneading a master batch was performed at an initiation temperature of 110°C, at a rotation speed of 70 rpm, for a kneading time period shown in Table 2, using a Banbury mixer. Subsequently, a step of finally kneading the batch with zinc oxide, a vulcanization accelerating agent, and sulfur was performed, so that each of the rubber compositions in Examples and Comparative Examples was prepared.

Each of the rubber compositions thus obtained was vulcanized under vulcanization conditions at 160°C for 20 minutes, so that a specified sample piece was made for evaluation of the average distance between domains (µm) and the proportion of the area of generated ozone cracks (%). The results are shown in Table 2.

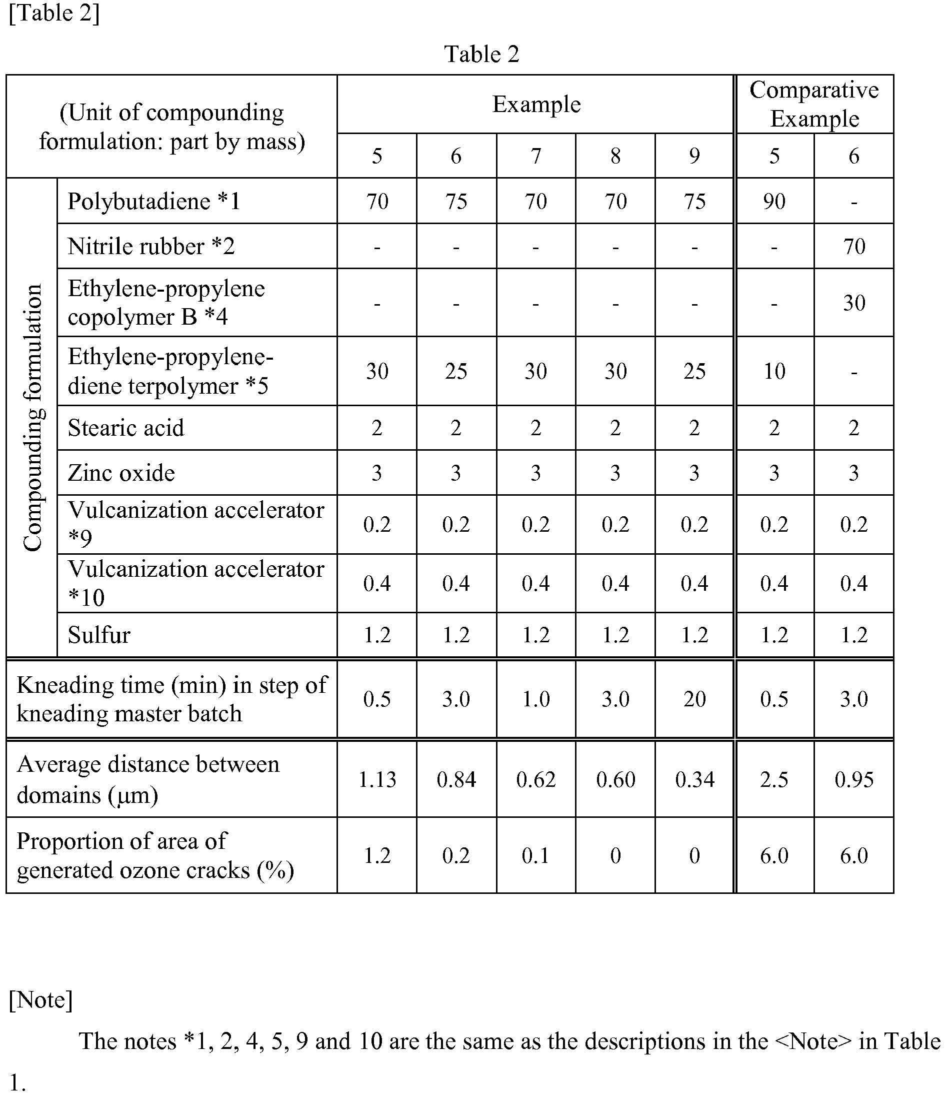

In order to compare Examples 1 to 4 in which carbon black was compounded with Examples 5 to 9 in which no carbon black was compounded, the kneading time period in the step of kneading a master batch (min), the dynamic compressive complex elastic modulus (E_{c}*) of the domain (MPa), the average distance between domains (µm), and the proportion of the area of generated ozone cracks (%) of Examples 1 to 9 are described in Table 3.
[Table 3]

**Table 3**

| | Example | | | | | | | | |
|---|---|---|---|---|---|---|---|---|---|
| | 1 | 2 | 3 | 4 | 5 | 6 | 7 | 8 | 9 |
| Kneading time (min) in step of kneading master batch | 3.0 | 3.0 | 3.0 | 3.0 | 0.5 | 3.0 | 1.0 | 3.0 | 20 |
| Dynamic compressive complex elastic modulus (E_{c}*) of the domain (MPa) | 7.8 | 4.2 | 4.4 | 4.4 | 4.4 | 4.4 | 4.4 | 4.4 | 4.4 |
| Average distance between domains (µm) | 0.14 | 0.15 | 0.15 | 0.15 | 1.13 | 0.84 | 0.62 | 0.60 | 0.34 |
| Proportion of area of generated ozone cracks (%) | 3.4 | 0 | 0 | 0 | 1.2 | 0.2 | 0.1 | 0 | 0 |

As shown in Table 1, the rubber compositions in Examples 1, 2 and 4 allowed a covalent bond to be formed in the interface between the matrix and the domain due to compounding of an organic peroxide. The rubber composition in Example 3 also allowed a covalent bond to be formed in the interface between the matrix and the domain in the same manner by sulfur vulcanization due to the use of an ethylene-propylene-diene terpolymer. In Comparative Example 1, no organic peroxide was compounded, so that no covalent bond was formed in the interface between the matrix and the domain.

As described above, the rubber compositions in Examples 1 to 4 with use of an ethylene-propylene copolymer and an organic peroxide or with use of an ethylene-propylene-diene terpolymer allowed a covalent bond to be formed in the interface between the matrix and the domain by compounding of the organic peroxide or by sulfur vulcanization, so that the ozone resistance was substantially improved in comparison with the rubber compositions in Comparative Examples 1 to 3. Furthermore, the ozone resistance of the rubber compositions in Examples 1 to 4 was more excellent than that of the rubber composition in Comparative Example 4 with use of nitrile rubber, i.e. a polar rubber.

As shown in Table 2, the rubber compositions in Examples 5 to 9 allowed a covalent bond to be formed in the interface between the matrix and the domain by sulfur vulcanization due to use of an ethylene-propylene-diene terpolymer, and had an average distance (µm) between domains of 2 µm or less, so that the ozone resistance was substantially improved in comparison with the rubber composition in Comparative Example 5 having an average distance (µm) between domains of 2.5 µm. Furthermore, the ozone resistance of the rubber compositions in Examples 5 to 9 was more excellent than that of the rubber composition in Comparative Example 6 with use of nitrile rubber, i.e. a polar rubber.

### INDUSTRIAL APPLICABILITY

The rubber composition of the present invention can substantially improve the ozone resistance of tires, pneumatic tires in particular, so that it can be suitably used in various tires for passenger vehicles (including light passenger vehicles), light trucks, trucks, buses, and off-road vehicles (construction vehicles and mining vehicles), and in the member for sidewall surface layer and the member for ground-gripping tread of pneumatic tires in particular. The rubber composition of the present invention can be suitably used in the member for sidewall surface layer and the member for ground-gripping tread of pneumatic tires for passenger vehicles, in particular.

## Claims

1. A rubber composition comprising a matrix of a nonpolar conjugated diene polymer in which domains formed of an olefin polymer are dispersed, the matrix and the domain having an interface therebetween in which a chemical bond exists after vulcanization, the domain having a dynamic compressive complex elastic modulus (E_{c}*) of 10 MPa or less, wherein the dynamic compressive complex elastic modulus (E_{c}*) is obtained by the steps of: fixing a sample to a sample fixing base specialized for an atomic force microscope (AFM); measuring a shape image in an AC mode with the AFM and a cantilever (material: Si, spring constant: 48 N/m, radius of curvature at the tip: 150 nm) at room temperature (23°C) and simultaneously measuring a force curve of a portion observed as the domain in a contact mode (at room temperature (23°C), with a moving speed of the cantilever of 2 µm/s and a maximum indentation load of 2 µN); and analyzing a force-volume curve obtained from the force curve based on the theory of Hertz included in the software attached to the AFM device.

2. A rubber composition comprising a matrix of a nonpolar conjugated diene polymer in which domains formed of an olefin polymer are dispersed, the matrix and the domain having an interface therebetween in which a chemical bond exists after vulcanization, with an average distance between the domains of 2 µm or less, wherein the average distance (µm) between the domains is measured by the steps of observing a thin film of the rubber composition after vulcanization with an atomic force microscope (AFM), obtaining a total area of the matrix portion and a summation of boundary lengths of the domain portions through binarization of the matrix and the domains, and calculating a ratio between the total area and the summation as a statistical distance between domain walls, i.e. the average distance between domains.

3. The rubber composition according to claim 1 or 2, wherein the chemical bond existing in the interface between the matrix and the domain is a covalent bond.

4. The rubber composition according to claim 1 or 3, wherein the dynamic compressive complex elastic modulus (E_{c}*) of the domain is 5 MPa or less.

5. The rubber composition according to claim 2 or 3, wherein the average distance between the domains is 0.6 µm or less.

6. The rubber composition according to any one of claims 1 to 5, wherein the nonpolar conjugated diene polymer is one or more polymers selected from the group consisting of polybutadiene, synthetic polyisoprene, and natural rubber.

7. The rubber composition according to any one of claims 1 to 6, wherein the olefin polymer is an α-olefin polymer.

8. The rubber composition according to claim 7, wherein the α-olefin polymer is one or more polymers selected from the group consisting of polyethylene, polypropylene, an ethylene-propylene copolymer, and an ethylene-propylene-diene terpolymer.

9. The rubber composition according to claim 8, wherein the chemical bond is formed in the interface between a matrix of the nonpolar conjugated diene polymer and a domain formed from one or more olefin polymers selected from the group consisting of the polyethylene, the polypropylene, and the ethylene-propylene copolymer, through one or more binders selected from the group consisting of a peroxide and an azo polymerization initiator, or formed in the interface between a matrix of the nonpolar conjugated diene polymer and a domain formed from the ethylene-propylene-diene terpolymer through a sulfur cross-linking agent or the binder.

10. The rubber composition according to claim 9, wherein the chemical bond is formed in the interface between a matrix of the nonpolar conjugated diene polymer and a domain formed from the ethylene-propylene-diene terpolymer through the sulfur cross-linking agent.

11. A tire comprising a member having the rubber composition according to any one of claims 1 to 10.
